# EUROPEAN PATENT SPECIFICATION

(11) **EP 1 616 623 B1**
(45) Date of publication and mention of the grant of the patent: **04.07.2007**
(21) Application number: 05076379.6
(22) Date of filing: 07.06.2005
(51) Int. Cl.: B02C 17/18

(54) **Discontinuous grinding mill for ceramic materials**
Diskontinuierliche Mühle für keramische Materialien
Broyeur discontinu pour matériaux céramiques

(30) Priority: 16.07.2004 IT RE20040086
(43) Date of publication of application: 18.01.2006
(73) Proprietor: SACMI COOPERATIVA MECCANICI IMOLA SOCIETA' COOPERATIVA, 40026 Imola (Bologna) (IT)
(72) Inventor: Tontini, Walter SACMI Coop. Mec. Imola Soc. Coop., 40026 Imola (Bologna) (IT); Rivola, Pietro SACMI Coop. Mec. Imola Soc. Coop., 40026 Imola (Bologna) (IT); Casadio, Simone SACMI Coop. Mec. Imola Soc. Coop., 40026 Imola (Bologna) (IT)
(74) Representative: Corradini, Corrado

(56) References cited:
- DE-A1- 3 023 311
- US-A- 4 603 814
- US-A- 4 801 100

## Description

The present invention refers to a discontinuous grinding mill particularly, but not exclusively, suitable for being used in the preparation of doughs in the field of ceramics.

In the field of ceramics it is known to prepare doughs through wet fragmentation of the raw materials and the addition of specific additives during the fragmentation operation itself, until a homogeneous slip having the desired granulometry of the powders in suspension is obtained.

According to the prior art, the fragmentation process comprises three successive steps starting with a crushing step and ending with a refining step.

For such an operation in the field of ceramics grinding mills are known and generally used in which fragmentation is carried out by the collisions, and in any case by the interactions between grinding bodies that are generally spherical in shape.

For the different fragmentation steps the grinding bodies must be of different sizes that decrease passing from the crushing step to the refining step.

Moreover, for each fragmentation step, for which grinding bodies of specific sizes are used, there is a speed that optimises the processing efficiency, the processing times and the energy consumption of the grinding plants.

Known grinding mills that carry out the fragmentation of the raw materials are of the discontinuous or continuous type.

Discontinuous mills come in the form of machines with a single chamber sealed during operation, for which reason the loading operations of the coarse raw materials take place with the machine shut down through the opening of a suitable mouth. Inside the grinding chamber there are grinding bodies of different sizes; to optimise the energy consumption of fragmentation operating cycles of discontinuous mills have been experimentally developed that vary the rotation speed of the drum during the operation of the machine, to make the optimal dynamic action in the various grinding steps (collision in crushing, pressing and rubbing in refining) predominant.

Continuous mills, on the other hand, comprise many intercommunicating chambers, the first and last of which are respectively equipped with a loading mouth and a discharge mouth, through which the material is continuously loaded and unloaded. In other words, a continuous mill can be considered as a series of single-chambered mills arranged in series having the same diameter and rotating at the same speed.

Known plants, although used and appreciated, are not without drawbacks; in particular, discontinuous grinding has substantial idle times for the steps of loading raw materials and discharging slip; these steps are always carried out manually as it is for example known from US-A-4603814.

In addition to this discontinuous mills also require washing cycles for each change in materials treated, which comprise a step of loading the machine with clean water, a step of rotating the machine at a reduced speed, and a step of discharging the water and the milling residues.

In this way, there is a worsening of the processing times with a consequent increase in costs, together with lower efficiency.

The purpose of the present invention is that of overcoming the aforementioned drawbacks providing a discontinuous grinding mill in which the step of discharging the processed materials takes place automatically without the manual intervention of an operator.

Another purpose of the invention is that of achieving said purpose in the context of a simple, rational and reliable constructive solution.

Said purposes are accomplished thanks to a grinding mill and method using this mill as defined in appended claims.

In particular, one embodiment of the invention provides a grinding mill comprising a cylindrical drum with horizontal axis suitable for rotating around said axis both in the operative direction and in the opposite direction, said cylindrical drum being equipped with an outer shell closed by a top base plate and by a bottom base plate and with means for emptying the cylindrical drum itself, which comprise: at least one outlet mouth formed in the outer shell, and a discharge pipe that, being equipped with a first end associated with said at least one outlet mouth and a second end open to the outside, surrounds the outer shell in a direction matching the operating rotation direction of the cylindrical drum.

Thanks to this solution, it is possible to completely empty the cylindrical drum, after grinding, by simply making it rotate in the opposite direction to the operating direction, without the direct intervention of an operator and with greater efficiency.

More specifically, the invention foresees that the discharge pipe be wound around the outer shell of the cylindrical drum with a winding angle equal to 180°, with it also being particularly advantageous for said winding angle to be no lower than 270°.

In this way, indeed, any accidental leakage of material from the cylindrical drum during grinding is advantageously avoided.

A further embodiment of the invention also foresees that the emptying means of the cylindrical drum comprise a plurality of outlet mouths and, for each outlet mouth, a discharge pipe; in particular, it is foreseen to arrange said plurality of mouths so that they lie on the same perimetric circumference of the outer shell, dividing it into arcs of equal size, and therefore being equally spaced apart.

Thanks to this solution in each rotation of the cylindrical drum a large amount of slip is discharged, making the emptying operation quicker and more efficient. A further advantage consists of the fact that thanks to the finding the need for so-called recovery cycles, structured like washing cycles but shorter, which have the function of also emptying the material that remains on the grinding bodies from the chamber, is eliminated.

Also advantageous according to the invention is the solution that foresees associating the discharge pipe with the respective outlet mouth with the interposition of a fitting element fixed to the outer shell; said fitting element being equipped with a filtering grill that advantageously allows the passage of the slip, at the same time avoiding the leaking of the grinding bodies.

Finally, the invention foresees an automatic loading system of the cylindrical drum that comprises a hollow cylindrical hub that, coaxially associated with the top base plate of said cylindrical drum, places the inside of the latter in communication with the outside, and an Archimedean screw device coupled with said hollow cylindrical hub for the introduction of the raw materials to be processed.

In this way, the loading step of the cylindrical drum is also made quicker and more efficient, further reducing the idle times and consequently the production costs.

The dependent claims outline preferred and particularly advantageous embodiments of the invention.

Further characteristics and advantages of the invention shall become clear from reading the following description, given as an example and not for limiting purposes, with the help of the figures illustrated in the attached tables, in which:
Fig. 1 is a front view of a discontinuous grinding mill according to the invention;
Fig. 2 is the section II-II of fig. 1;
Fig. 3 shows, in detail, a fitting element of the discontinuous grinding mill according to the invention.

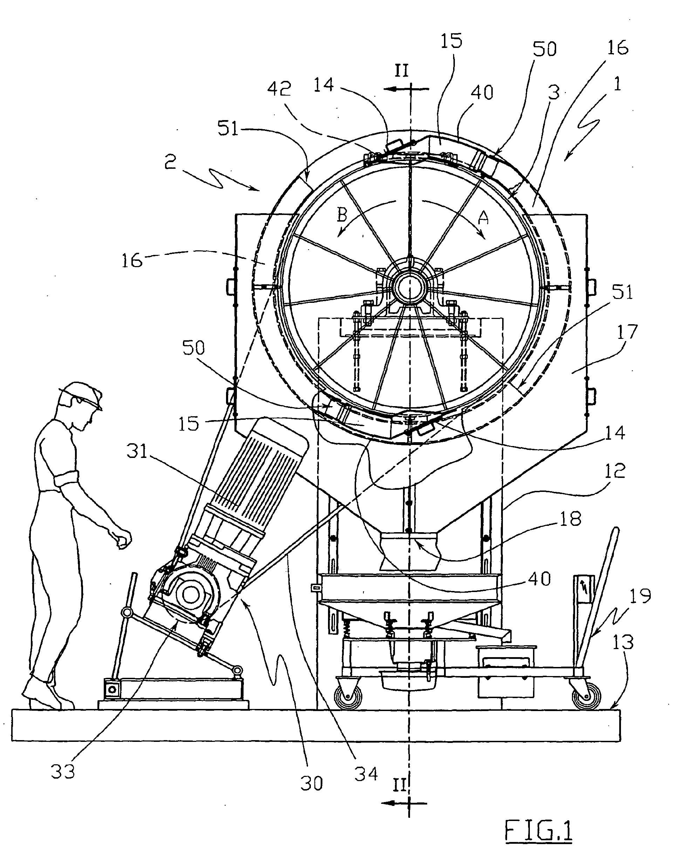

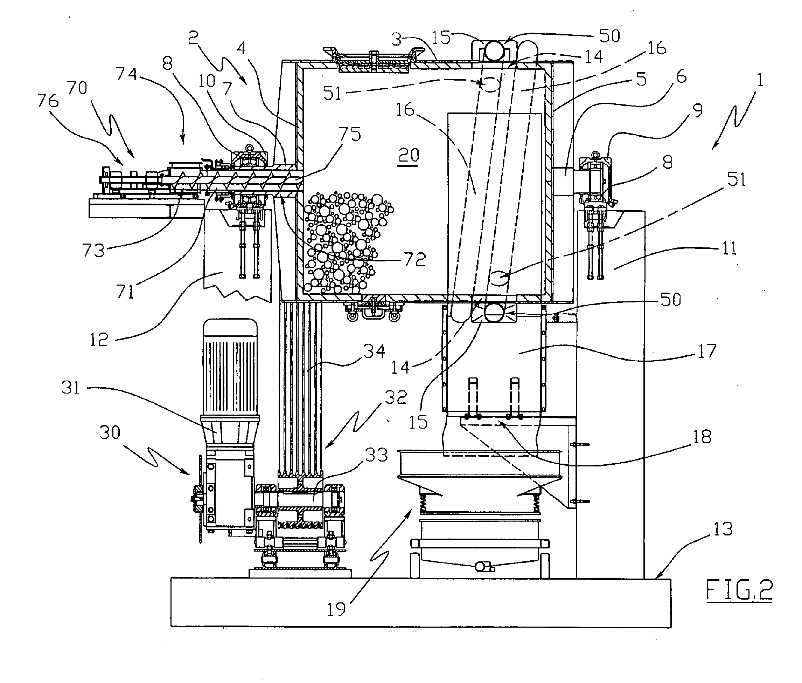

From the aforementioned figures 1 and 2, it is possible to see a discontinuous grinding mill 1 for processing coarse raw materials in order to obtain a slip having a certain granulometry.

Said discontinuous grinding mill 1 comprises a cylindrical drum 2 with horizontal axis that, in turn, comprises an outer shell 3, a top base plate 4 and a bottom base plate 5 that, closing said outer shell 3 at the sides, define an inner chamber 20 in which grinding bodies of suitable sizes are introduced.

A projecting shaft 6 mounted coaxial with the outer shell 3 is associated with the bottom base plate 5 (see fig. 2), whereas a hollow cylindrical hub 7, also projecting and coaxial with the outer shell 3, suitable for placing the inner chamber 20 in communication with the outside acting as a mouth, is associated with the top base plate 4.

The projecting shaft 6 and the hollow cylindrical hub 7 couple, with the interposition of the bearings 8, respectively with the supports 9 and 10 that support the cylindrical drum 2 allowing it to rotate about its axis.

Both of the supports 9 and 10 are fixed to two strong shoulders, 11 and 12 respectively, which place the cylindrical drum 2 raised, and suitably spaced, with respect to the plane of the ground 13.

The discontinuous mill 1 also comprises an actuation device 30 of the cylindrical drum 2, so that the latter can be commanded into rotation (see figs. 1 and 2).

Said actuation device 30 comprises a motor reducer 31 that provides the motion to the cylindrical drum 2 through a belt transmission 32 (see fig. 2); said belt transmission 32 has a pulley 33 connected directly to the motor reducer 31, and a belt 34 wound on the pulley 33 itself and on the outer surface of the outer shell 3 at the top base plate 4 (see fig. 2).

In particular, the motor reducer 31 is suitable for making the pulley 33 and, consequently, the cylindrical drum 2 rotate in both directions of rotation equally well; in this way, it is possible to define an operative direction of rotation A used during the grinding of coarse raw materials, and an opposite direction of rotation B for the cylindrical drum 2 (see fig. 1).

As can be seen from fig. 2, inside the hollow cylindrical hub 7 an Archimedean screw device 70 is mounted that acts as a loading system of the raw materials.

Said Archimedean screw device 70 comprises a cylindrical sleeve 71 equipped with a first portion 72 suitable for being slotted inside the hollow cylindrical hub 7 until it opens into the inner chamber 20, and a second portion 73 that remains on the outside and that carries a mouth with a vertical axis 74 for the introduction of the coarse raw materials. Inside the cylindrical sleeve 71, coaxial with it, a helical body 75 is rotatably mounted, which, moved by an actuation system 76, is suitable for thrusting said raw materials from the mouth with vertical axis 74 up to the inner chamber 20 of the cylindrical drum 2.

The discontinuous grinding mill 1 is also equipped with means for emptying the cylindrical drum 2.

Indeed, from figure 2 it can be seen that on the outer shell 3 of the cylindrical drum 2 there are two outlet mouths 14 open in the thickness of said outer shell 3; said outlet mouths 14 are arranged substantially along the same diameter of a perimetric circumference of the outer shell 3 itself (see fig. 1).

At each of said outlet mouths 14 there is a fitting element 15 fixed integrally to the outside of the outer shell 3 so as to completely close the outlet mouth 14 itself (see fig. 1).

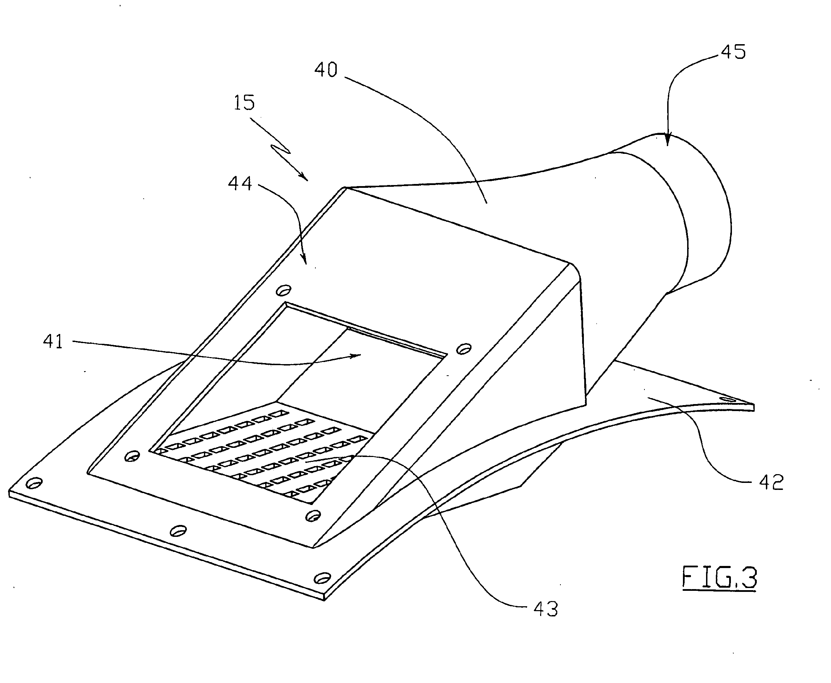

Each fitting element 15 (see fig. 3) comprises a hollow body 40 that defines, inside of it, a duct 41 opening into the inner chamber 20 of the cylindrical drum 2 through the respective outlet mouth 14, and a shaped flange 42 having a curvature suitable for coupling with the outer shell 3 to which it is fixed (see fig. 1).

In particular, the hollow body 40 of each fitting element 15 has a first portion 44, at the shaped flange 42, shaped like a wedge so that the duct 41 is inclined with respect to the corresponding outlet mouth 14, and a second portion 45 shaped like a sleeve that projects outside the outer shell 3.

Each fitting element 15 is mounted on the cylindrical drum 2 so that the duct 41 follows the profile of the cylindrical drum 2 in the same direction as the operative direction of rotation A (see fig. 1).

Moreover, as shown in figure 3, the duct 41 of a fitting element 15 is intercepted, close to the corresponding outlet mouth 14, by a filtering grill 43.

With reference to figures 1 and 2, a discharge pipe 16 that has one end 50 fixed to the sleeve-shaped portion 45 of the corresponding fitting element 15 and one end open to the outside 51 is associated with each of the two fitting element 15 (see fig. 1); said discharge pipe 16 is wound around the outer shell 3 in the same way as the operative direction of rotation A of the cylindrical drum 2, and extending for a winding angle of substantially 270° (see figs. 1 and 2).

At the discharge pipes 16, below the outer shell 3, in the space made available by the height of the shoulders 11 and 12, a collection case 17 shaped like a hopper is arranged that at least partially encloses the cylindrical drum 2 (see figs. 1 and 2); said collection case 17 is fixed to the shoulder 11, and it is equipped with a bottom opening 18 that remains raised with respect to the plane of the ground 13.

In use, the cylindrical drum 2 of the discontinuous grinding mill 1 is placed in rotation in the operative direction A through the actuation device 30 (see fig. 1). The coarse raw materials are introduced inside the inner chamber 20 through the Archimedean screw device 70 automatically and without the need to stop the grinding mill 1, until the desired filling of the inner chamber 20 itself is reached (see fig. 2).

In this way the grinding step begins: the cylindrical drum 2 rotates constantly in the operative direction A, and the interaction between the grinding bodies contained in the inner chamber 20 and the raw materials introduced produces the fragmentation of these materials.

In particular, the grinding step can be divided into a plurality of intermediate steps during which the rotation of the cylindrical drum 2, maintaining the operative direction A, takes place at different speeds; said intermediate steps are necessary to optimise the dynamic action between raw materials and grinding bodies, and to reduce the energy consumption of the grinding mill 1.

During the entire grinding step, the inner chamber 20 of the cylindrical drum 2 is completely insulated from the external environment, i.e. the material cannot go out from the inner chamber 20 although there exists a connection with the outside that is always open, due to the outlet mouths 14 and the corresponding fitting elements 15 and discharge pipes 16.

To realise this the rotary cycle of the cylindrical drum 2 should be ideally divided, with reference to one of the outlet mouths 14, in a decreasing step during which said outlet mouth 14 goes from the point of maximum height to the point of minimum height with respect to the plane of the ground 13, and in an increasing step during which it goes from the point of minimum height to the point of maximum height (see fig. 1).

In this way, it is possible to state that each of the outlet mouths 14 is engaged by a flow of material coming out from the inner chamber 20 when, during its decreasing step, it is lower down with respect to the axis of the cylindrical drum 2: in such a situation, indeed, the material tends to cross it by gravity.

Therefore, since the discharge pipes 16 are wound on the outer shell by a winding angle of no less than 180°, when one of said outlet mouths 14 is lower down with respect to the axis of the cylindrical drum 2, the material that crosses it accumulates in the elbow formed by the corresponding discharge pipe 16 since, at the same time, the open end 51 of said discharge pipe 16 is higher up with respect to the aforementioned axis of the cylindrical drum 2 (see fig. 1).

Moreover, since the discharge pipes 16 are wound on the outer shell 3 in the same way as the operative direction of rotation A, to the extent that the cylindrical drum 2 rotates in the operative direction A, the open end 51 of the discharge pipe 16 is constantly early with respect to the corresponding outlet mouth 14 and, in particular, with respect to the aforementioned accumulated material (see fig. 1); therefore, following the continuation of the rotation, said accumulated material can never meet the open end 51 of the discharge pipe 16, but on the contrary, when the outlet mouth 14 begins the increasing step of its rotary cycle, it tends to flow back inside the chamber 20.

When the grinding step is over, one proceeds to emptying the inner chamber 20 and collecting the slip obtained. This operation takes place dynamically simply by actuating the cylindrical drum 2 in the direction of rotation B, opposite the operative direction A (see fig. 1).

Indeed, in this operating condition each outlet mouth 14 is early, during rotation, with respect to the open end 51 of the corresponding discharge pipe 16; therefore, when said outlet mouth 14 is at a lower height with respect to the axis of the cylindrical drum 2, the slip flows through the duct 41 of the fitting element 15 inside the discharge pipe 16 where, thanks to the rotation of the cylindrical drum 2, it is taken to meet the open end 51 and therefore to go out to the outside (see fig. 1).

The presence of the filtering grill 43 to intercept the duct 41 ensures the passage of the slip, at the same time holding the grinding bodies inside the chamber 20 of the cylindrical drum 2.

For each complete rotation of the cylindrical drum 2 in the direction of rotation B, part of the slip contained in the inner chamber 20 is emptied to the outside, and this emptying step can be prolonged until complete emptying is obtained.

Coming out from the open end 51 of the discharge pipe 16, said slip falls inside the collection case 17 and is conveyed, by gravity, towards the bottom opening 18.

Finally, below said bottom opening 18 mobile accumulation means 19 are arranged for the collection of the slip and its movement away from the grinding mill 1 (see figs. 1 and 2).

An indicative example of the operating cycle is shown hereafter with reference to a grinding mill 1, according to the finding, having an inner chamber 20 of volume equal to 2000 litres and containing 2000 kg in weight of grinding bodies.

First of all, the cylindrical drum 2 is actuated so that it rotates on its axis in the operative direction A.

Thereafter, the loading step begins: the inner chamber 20 is filled with an amount equal to 420 kg of raw materials, of which 40% consists of clay and the remaining 60% consists of hard materials in different proportions between silica sands, kaolin, feldspar, etc.

After the loading step the grinding step begins that, as stated, can be divided into a plurality of steps during which the cylindrical drum 2 rotates, always in the operative direction A, at different speeds.

Overall, the loading and grinding steps last about 85 minutes and produce about 390 litres of slip.

When the grinding is complete, by making the cylindrical drum 2 rotate in the opposite direction B, the discharge step of the slip begins that lasts approximately 10 minutes.

During this step, as already stated, the slip that comes out from the cylindrical drum 2 is finally collected in the case 17 and, from here, in the mobile accumulation means 19 below.

## Claims

1. Grinding mill (1) comprising a cylindrical drum (2) with horizontal axis suitable for rotating about said axis both in an operative direction (A) and in an opposite direction (B), said cylindrical drum being equipped with an outer shell (3) closed by a top base plate (4) and by a bottom base plate (5) and with means (14, 15, 16) for emptying the cylindrical drum (2) itself, wherein said means (14, 15, 16) for emptying the cylindrical drum (2) comprise at least one outlet mouth (14) formed in the outer shell (3), and a discharge pipe **characterised in that** (16') said discharge pipe (16), being equipped with a first end (50) associated with said at least one outlet mouth (14) and a second end (51) open to the outside, surrounds the outer shell (3) in a direction matching the operating rotation direction (A) of the cylindrical drum (2).

2. Grinding mill (1) according to claim 1, **characterised in that** said discharge pipe (16) surrounds the outer shell (3) with a winding angle greater than or equal to 180°.

3. Grinding mill (1) according to claim 2, **characterised in that** said winding angle is greater than or equal to 270°.

4. Grinding mill (1) according to claim 1, **characterised in that** said outlet mouth (14) is arranged close to the bottom base plate (5) of the cylindrical drum (2).

5. Grinding mill (1) according to claim 1, **characterised in that** said means (14, 15, 16) for emptying the cylindrical drum (2) comprise a plurality of outlet mouths (14) and, for each outlet mouth (14), a discharge pipe (16).

6. Grinding mill (1) according to claim 5, **characterised in that** said outlet mouths (14) are arranged equally spaced apart on the same perimetric circumference of the outer shell (3).

7. Grinding mill (1) according to claim 1 or 5, **characterised in that** said discharge pipe (16) is associated with the outlet mouth (14) with the interposition of a fitting element (15).

8. Grinding mill (1) according to claim 7, **characterised in that** said fitting element (15) comprises a hollow body (40) suitable for providing a passage duct (41) inside it, and a shaped flange (42) suitable for fixing it to the outer shell (3) at the outlet mouth (14).

9. Grinding mill (1) according to claim 8, **characterised in that** said passage duct (41) is intercepted by a filtering grill (43).

10. Grinding mill (1) according to claim 1, **characterised in that** it comprises an automatic loading system of the cylindrical drum (2).

11. Grinding mill (1) according to claim 10, **characterised in that** said automatic loading system of the cylindrical drum (2) comprises: a hollow cylindrical hub (7), coaxially arranged on the top base plate (4) of the cylindrical drum that places the inside of the cylindrical drum in communication with the outside, and an Archimedean screw device (70) associated with said hollow cylindrical hub (7).

12. Grinding mill (1) according to claim 11, **characterised in that** said Archimedean screw device (70) comprises: a cylindrical sleeve (71) suitable for being slotted for a portion inside the hollow cylindrical hub (7), a helical body (75) rotating coaxially inside said cylindrical sleeve (71), a supply mouth (74) and an actuation system (76) of said helical body (75).

13. Grinding mill (1) according to claim 1, **characterised in that** it comprises a collection case (17).

14. Grinding mill (1) according to claim 13, **characterised in that** said collection case is shaped like a hopper.

15. Method for the fragmentation of coarse raw materials with a grinding mill (1) according to claim 1, comprising the steps of:
- loading the cylindrical drum (2) of the grinding mill (1) with coarse raw materials;
- grinding the coarse raw materials by making said cylindrical drum (2) rotate in the operative direction (A), until a desired granulometry of said raw materials is obtained; **characterised in that** it comprises step of
- discharging the cylindrical drum (2) by placing it in rotation in the opposite direction (B).

16. Method for the fragmentation of coarse raw materials according to claim 15, **characterised in that** the loading step takes place with the cylindrical drum (2) rotating in the operative direction (A).

17. Method for the fragmentation of coarse raw materials according to claim 15, **characterised in that** the loading step of the cylindrical drum (2) takes place continuously until a desired filling value of the inner chamber (20) is reached.

18. Method for the fragmentation of coarse raw materials according to claim 15, **characterised in that** the loading step and the grinding step take place consecutively, without interrupting the rotation of the cylindrical drum (2).

19. Method for the fragmentation of coarse raw materials according to claim 15, **characterised in that** the grinding step comprises a plurality of steps that differ from each other for the rotation speed taken up by the cylindrical drum (2).

## Patentansprüche

1. Mahlwerk (1), welches eine zylindrische Trommel (2) mit Horizontalachse umfasst, welche dazu in der Lage ist, sich um die Achse sowohl in einer Betriebsrichtung (A) als auch in einer entgegengesetzten Richtung (B) zu drehen, wobei die zylindrische Trommel mit einem Außenmantel (3), der durch eine obere Grundplatte (4) und durch eine untere Grundplatte (5) verschlossen ist, und mit Einrichtungen (14,15,16) zum Entleeren der zylindrischen Trommel (2) selbst ausgerüstet ist, wobei die Einrichtungen (14,15,16) zum Entleeren der zylindrischen Trommel (2) mindestens eine Auslassöffnung (14), die in dem Außenmantel (3) ausgebildet ist, und ein Ausstoßrohr (16) aufweisen,
**dadurch gekennzeichnet , dass**
das Ausstoßrohr (16) mit einem ersten Ende (50) ausgerüstet ist, welches mit mindestens einer Auslassöffnung (14) und einem nach außen offenen zweiten Ende (51) verbunden ist, wobei es den Außenmantel (3) in einer zu der Betriebsdrehrichtung (A) der zylindrischen Trommel (2) passenden Richtung umgibt.

2. Mahlwerk (1) nach Anspruch 1,
**dadurch gekennzeichnet , dass**
das Ausstoßrohr (16) den Außenmantel (3) mit einem Wickelwinkel von größer als oder gleich 180° umgibt.

3. Mahlwerk (1) nach Anspruch 2,
**dadurch gekennzeichnet , dass**
der Wickelwinkel größer als oder gleich 270° ist.

4. Mahlwerk (1) nach Anspruch 1,
**dadurch gekennzeichnet , dass**
die Auslassöffnung (14) in der Nähe der unteren Grundplatte (5) der zylindrischen Trommel (2) angeordnet ist.

5. Mahlwerk (1) nach Anspruch 1,
**dadurch gekennzeichnet , dass**
die Einrichtungen (14,15,16) zum Entleeren der zylindrischen Trommel (2) eine Mehrzahl von Auslassöffnungen (14) und für jede Auslassöffnung (14) ein Ausstoßrohr (16) aufweisen.

6. Mahlwerk (1) nach Anspruch 5,
**dadurch gekennzeichnet, dass**
die Auslassöffnungen (14) gleichweit voneinander beabstandet auf demselben Umfang des Außenmantels (3) angeordnet sind.

7. Mahlwerk (1) nach Anspruch 1 oder 5,
**dadurch gekennzeichnet, dass**
das Ausstoßrohr (16) durch Zwischenschaltung eines Anschlusselementes (15) mit der Auslassöffnung (14) verbunden ist.

8. Mahlwerk (1) nach Anspruch 7,
**dadurch gekennzeichnet, dass**
das Anschlusselement (15) einen Hohlkörper (40), der zur Bereitstellung eines Durchgangskanals (41) innerhalb desselben geeignet ist, und einen geformten Flansch (42) aufweist, der zur Befestigung desselben an dem Außenmantel (3) an der Auslassöffnung (14) in der Lage ist.

9. Mahlwerk (1) nach Anspruch 8,
**dadurch gekennzeichnet , dass**
der Durchgangskanal (41) durch ein Filtergitter (43) unterbrochen ist.

10. Mahlwerk (1) nach Anspruch 1,
**dadurch gekennzeichnet , dass**
es ein automatisches Beladungssystem der zylindrischen Trommel (2) aufweist.

11. Mahlwerk (1) nach Anspruch 10,
**dadurch gekennzeichnet , dass**
das automatische Beladungssystem der zylindrischen Trommel (2) Folgendes aufweist: eine hohle zylindrische Nabe (7), die koaxial auf der oberen Grundplatte (4) der zylindrischen Trommel angeordnet ist, die das Innere der zylindrischen Trommel mit dem Äußeren in Verbindung bringt, und eine mit der hohlen zylindrischen Nabe (7) verbundene archimedische Schraubenvorrichtung (70).

12. Mahlwerk (1) nach Anspruch 11,
**dadurch gekennzeichnet, dass**
die archimedische Schraubenvorrichtung (70) Folgendes aufweist: eine zylindrische Hülse (71), die geeignet ist, um für einen Abschnitt innerhalb der hohlen zylindrischen Nabe (7) geschlitzt zu werden, einen schraubenförmigen Körper (75), der sich koaxial innerhalb der zylindrischen Hülse (71) dreht, eine Zufuhröffnung (74) und ein Betätigungssystem (76) des schraubenförmigen Körpers (75).

13. Mahlwerk (1) nach Anspruch 1,
**dadurch gekennzeichnet , dass**
es ein Sammelgehäuse (17) aufweist.

14. Mahlwerk (1) nach Anspruch 13,
**dadurch gekennzeichnet , dass**
das Sammelgehäuse wie ein Trichter geformt ist.

15. Verfahren zur Zerkleinerung von groben Rohwerkstoffen mit einem Mahlwerk (1) nach Anspruch 1, welches die folgenden Schritte umfasst:
- Beladen der zylindrischen Trommel (2) des Mahlwerkes (1) mit groben Rohwerkstoffen;
- Mahlen der groben Rohwerkstoffe, indem die zylindrische Trommel (2) zum Drehen in die Betriebsrichtung (A) veranlasst wird, bis eine gewünschte Körnung der Rohwerkstoffe erhalten wird;
**dadurch gekennzeichnet , dass** es den folgenden Schritt umfasst:
- Entladen der zylindrischen Trommel (2), indem sie zur Drehung in die entgegengesetzte Richtung (B) veranlasst wird.

16. Verfahren zur Zerkleinerung von groben Rohwerkstoffen nach Anspruch 15,
**dadurch gekennzeichnet , dass**
der Beladungsschritt erfolgt, wobei sich die zylindrische Trommel (2) in die Betriebsrichtung (A) dreht.

17. Verfahren zur Zerkleinerung von groben Rohwerkstoffen nach Anspruch 15,
**dadurch gekennzeichnet, dass**
der Beladungsschritt der zylindrischen Trommel (2) ununterbrochen erfolgt, bis ein gewünschter Füllwert der Innenkammer (20) erreicht ist.

18. Verfahren zur Zerkleinerung von groben Rohwerkstoffen nach Anspruch 15,
**dadurch gekennzeichnet , dass**
der Beladungsschritt und der Mahlschritt nacheinander erfolgen, ohne dass die Drehung der zylindrischen Trommel (2) unterbrochen wird.

19. Verfahren zur Zerkleinerung von groben Rohwerkstoffen nach Anspruch 15,
**dadurch gekennzeichnet , dass**
der Mahlschritt eine Mehrzahl von Schritten umfasst, die sich in Bezug auf die durch die zylindrische Trommel (2) aufgenommene Drehgeschwindigkeit voneinander unterscheiden.

## Revendications

1. Broyeur (1) comprenant un tambour cylindrique (2) d'axe horizontal destiné à tourner autour de cet axe à la fois dans un sens de travail (A) et dans un sens opposé (B), le tambour cylindrique étant équipé d'une enveloppe externe (3) formée par une plaque supérieure de base (4) et une plaque inférieure de base (5) et comprenant un dispositif (14, 15, 16) destiné à vider le tambour cylindrique (2) lui-même, dans lequel le dispositif (14, 15, 16) destiné à vider le tambour cylindrique (2) comprend au moins une embouchure de sortie (14) formée dans l'enveloppe externe (3) et un tube d'évacuation (16), **caractérisé en ce que** le tube d'évacuation (16) est équipé d'une première extrémité (50) associée à l'embouchure de sortie au moins (14) et d'une seconde extrémité (51) qui débouche vers l'extérieur, qui entoure l'enveloppe externe (3) en direction correspondant au sens de rotation de travail (A) du tambour cylindrique (2).

2. Broyeur (1) selon la revendication 1, **caractérisé en ce que** le tube d'évacuation (16) entoure l'enveloppe externe (3) avec un angle d'enroulement supérieur ou égal à 180°.

3. Broyeur (1) selon la revendication 2, **caractérisé en ce que** l'angle d'enroulement est supérieur ou égal à 270°.

4. Broyeur (1) selon la revendication 1, **caractérisé en ce que** l'embouchure de sortie (14) est disposée près de la plaque inférieure de base (5) du tambour cylindrique (2).

5. Broyeur (1) selon la revendication 1, **caractérisé en ce que** le dispositif (14, 15, 16) destiné à vider le tambour cylindrique (2) comporte plusieurs embouchures de sortie (14) et, pour chaque embouchure de sortie (14), un tube d'évacuation (16).

6. Broyeur (1) selon la revendication 5, **caractérisé en ce que** les embouchures de sortie (14) sont disposées sous forme régulièrement espacées à la circonférence périphérique de l'enveloppe externe (3).

7. Broyeur (1) selon la revendication 1 ou 5, **caractérisé en ce que** le tube d'évacuation (16) est associé à l'embouchure de sortie (14) avec interposition d'un élément de montage (15).

8. Broyeur (1) selon la revendication 7, **caractérisé en ce que** l'élément de montage (15) comprend un corps creux (40) qui peut former un conduit de passage (41) à l'intérieur de celui-ci, et un flasque conformé (42) convenant à sa fixation à l'enveloppe externe (3) de l'embouchure de sortie (14).

9. Broyeur (1) selon la revendication 8, **caractérisé en ce que** le conduit de passage (41) est intercepté par une grille de filtration (43).

10. Broyeur (1) selon la revendication 1, **caractérisé en ce qu'**il comprend un système de chargement automatique du tambour cylindrique (2).

11. Broyeur (1) selon la revendication 10, **caractérisé en ce que** le système de chargement automatique du tambour cylindrique (2) comprend un moyeu cylindrique creux (7) disposé coaxialement sur la plaque supérieure de base (4) du tambour cylindrique qui place l'intérieur du tambour cylindrique en communication avec l'extérieur, et un dispositif (70) à vis d'Archimède associé au moyeu cylindrique creux (7).

12. Broyeur (1) selon la revendication 11, **caractérisé en ce que** le dispositif (70) à vis d'Archimède comporte un manchon cylindrique (71) qui peut être fendu sur une partie à l'intérieur du moyeu cylindrique creux (7), un corps en hélice (75) qui tourne coaxialement dans le manchon cylindrique (71), une embouchure d'alimentation (74) et un système de manoeuvre (76) du corps en hélice (75).

13. Broyeur (1) selon la revendication 1, **caractérisé en ce qu'**il comprend un carter collecteur (17).

14. Broyeur (1) selon la revendication 13, **caractérisé en ce que** le carter collecteur a la forme d'une trémie.

15. Procédé de fragmentation de matières premières grossières avec un broyeur (1) selon la revendication 1, comprenant les étapes suivantes :
le chargement du tambour cylindrique (2) du broyeur (1) par des matières premières grossières, et
le broyage des matières premières grossières par mise en rotation du tambour cylindrique (2) dans le sens de travail (A), jusqu'à l'obtention d'une granulométrie voulue des matières premières,
**caractérisé en ce qu'**il comprend l'étape d'évacuation du tambour cylindrique (2) par disposition de celui-ci en rotation dans le sens opposé (B).

16. Procédé de fragmentation de matières premières grossières selon la revendication 15, **caractérisé en ce que** l'étape de chargement est réalisée avec le tambour cylindrique (2) qui tourne dans le sens de travail (A).

17. Procédé de fragmentation de matières premières grossières selon la revendication 15, **caractérisé en ce que** l'étape de chargement du tambour cylindrique (2) s'effectue de façon continue jusqu'à l'obtention d'une valeur voulue de remplissage de la chambre interne (20).

18. Procédé de fragmentation de matières premières grossières selon la revendication 15, **caractérisé en ce que** l'étape de chargement et l'étape de broyage ont lieu consécutivement sans interruption de la rotation du tambour cylindrique (2).

19. Procédé de fragmentation de matières premières grossières selon la revendication 15, **caractérisé en ce que** l'étape de broyage comprend plusieurs étapes qui diffèrent les unes des autres par la vitesse de rotation du tambour cylindrique (2).
